**Europäisches Patentamt**

**European Patent Office**

**Office européen des brevets**

(19)

(11) Publication number : **0 520 954 A1**

## (12) EUROPEAN PATENT APPLICATION

(21) Application number : **92830241.3**

(22) Date of filing : **20.05.92**

(51) Int. Cl.⁵ : **G01F 23/28**

(30) Priority : **26.06.91 IT MI910582 U**

(43) Date of publication of application :
**30.12.92 Bulletin 92/53**

(84) Designated Contracting States :
**AT CH DE ES FR GB LI PT**

(71) Applicant : **Gallone, Cesare**
**3 Queens Street, Keep Upper Park Road**
**Camberley, Surrey (GB)**

(72) Inventor : **Gallone, Cesare**
**3 Queens Street, Keep Upper Park Road**
**Camberley, Surrey (GB)**

(74) Representative : **Righetti, Giuseppe**
**Bugnion S.p.A. Via Carlo Farini, 81**
**I-20159 Milano (IT)**

(54) **Optical signalling device for tanks.**

(57)   Associated with an envelope (3) housing a microlamp (4) and fastened to the inside of a tank (2) is a tailpiece (11) of transparent plastic material facing the lamp (4) through a connecting surface (19) and exhibiting at least an optical deviation surface aligned according to a given geometry with an end surface (14) exposed to the outside of the tank (2). Upon the action of the optical deviation surface (12), the light emitted from the microlamp (4) is reflected towards the end surface (14) or, vice-versa, refracted to the outside of the tailpiece (11), depending upon the fact that the tailpiece is above or below the level of the liquid (2a) contained in the tank (2), respectively.

FIG. 1

EP 0 520 954 A1

The present invention pertains to the technical sector of signalling devices both in the domestic and the industrial fields, and in particular relates to an optical signalling device for tanks, of the type comprising a bulb microlamp connected in circuit to a feeding cable and enclosed in an envelope closed at least on the microlamp side.

It is known that in the field of optical signals relating to minimum and/or maximum reference values in liquid tanks such as for example domestic apparatus and/or boilers and the like, the reaching of a given upper or lower level considered as the safety limit needs to be immediately signalled so that an operator may be conveniently warned and may be able to intervene in case of need.

More particularly, in the domestic and industrial fields it is necessary for an operator to be able to notice at once a situation according to which a minimum safety limit or a maximum safety limit is reached, below or above which respectively a failure or a danger in operation may be caused.

At the present state of the art these signals are usually performed through the use of devices of the electro-optical type. For example, there are floats that through linkages operate switches which give then rise to an optical lamp signal when the tank level goes below or above a given limit, these switches being thereby capable of meeting all requirements.

In other embodiments devices of the electronic type are utilized which are combined with particular sensors. When said sensors change of state sending a specific signal to the electronic devices, the activation of a signalling LED (light emitting diode) occurs which enables the operator to detect the abnormal operating state relating to a given maximum or minimum level in a tank.

However these embodiments, which are sometimes a combination of two different types of devices in which an electronic part is for example associated with an electric part operated through mechanical linkages, give rise to a very complicated signalling system also involving high total costs. In addition, with these types of devices it is difficult to intervene when servicing is needed, because they generally are monobloc devices and therefore need to be removed and replaced integrally.

It is also important to note that these devices are not completely reliable because they are of delicate nature as a result of their complexity and at the same time do not enable a high versatility of use to be achieved, in that it is impossible to use them for signalling purposes in tanks without carrying out modifications, when detection of both minimum and maximum levels is required.

Limits offered by the devices of the known art can be summarized as follows:

a) the system is relatively complicated under both the circuit point of view and the mechanical point of view;

b) it is also weak and fragile taking into account the fact that it must operate under any situation, limit situations inclusive;

c) the accomplishment and servicing thereof is expensive;

d) the versatility of use is unsatisfactory.

In the light of the above drawbacks present in known signalling devices, the main object of the present invention is to provide an optical signalling device for tanks capable of meeting all situations, that is capable of signalling both the minimum and maximum levels of a tank content and also achieving an important simplification of the mechanical component parts thereof and the electric circuitry for activating the warning lamp.

The foregoing and still further objects that will become more apparent in the course of the following description are attained by a device for providing optical signallings in tanks, characterized in that associated with said envelope fastened to the inside of a tank is at least a side tailpiece extending from the outer side edge of the envelope in the vicinity of the bulb and exhibiting at least a connecting surface facing said microlamp, at least a first optical deviation surface whose normal line forms a given angle of incidence with the normal to the longitudinal axis of the envelope, as well as an end surface exposed to the outside of the tank: and aligned with respect to said first optical deviation surface according to an alignment direction forming, with the normal to the first optical deviation surface, an angle of reflection of substantially the same value as the angle of incidence, said connecting surface, first optical deviation surface and end surface having optical. transparency characteristics.

Further features and advantages of the invention will be better understood from the following detailed description of a preferred embodiment of the invention given hereinafter by way of non-limiting example with reference to the accompanying drawings, in which:

- Fig. 1 is a diagrammatic view of the device in its different embodiments applied to a tank, in accordance with the invention;

- Fig. 2 is a section view of the device of the invention;

- Fig. 3 is a plan view of the device.

Referring to the drawings, an optical signalling device for tanks in accordance with the present invention has been generally identified by reference numeral 1.

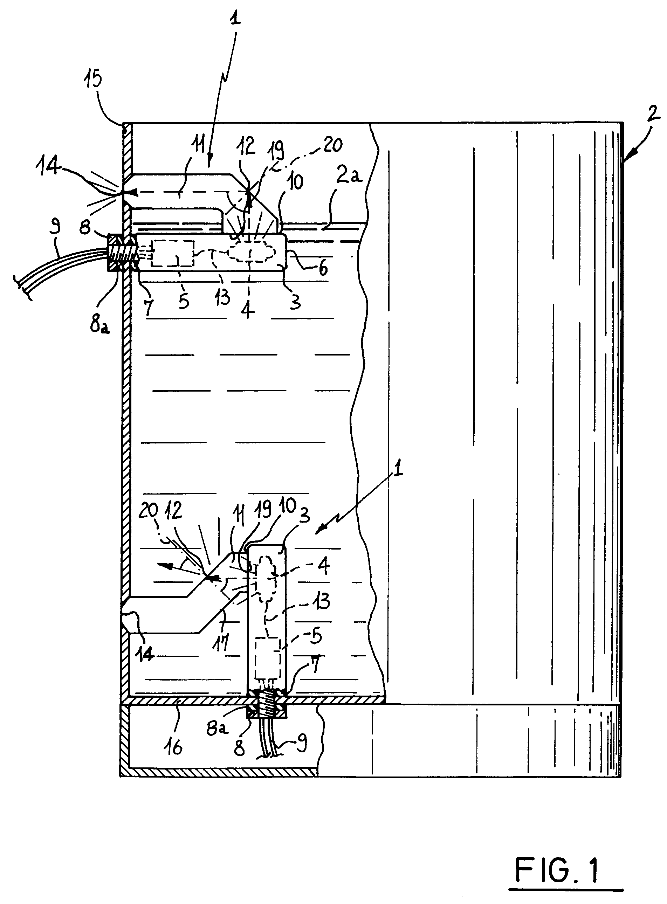

Referring particularly to Fig. 1, it is possible to see that a general tank 2 is shown in which a non specific transparent liquid, water for example, denoted by 2a is present.

In this figure two embodiments of the invention referring to two different situations have been shown.

As regards the device 1 shown in the upper part of the tank 2, it is used as a signaller when the liquid 2a in the tank exceeds a given level; the other device shown at the bottom of tank 2 is used to signal the opposite situation, that is when the liquid goes below a given level.

With reference to the first solution, an envelope made of polycarbonate or other plastic material enclosing a bulb microlamp 4 has been identified by 3. Connecting wires 13 come out of said microlamp and, passing through a space 5 where, in case of mains supply, one or more electric drop resistors (not shown) are normally housed, they connect the microlamp 4 to feeding cables 9 coming out of the envelope 3. The envelope 3 is normally fastened to the inside of tank 2 by adopting several different solutions, such as for example threaded elements 8 with sealing elements 8a and the like, and is closed at least on the microlamp 4 side in order to protect it against damages due to the entry of liquid.

The closed side of envelope 3 has been denoted by 6 in order to distinguish it from the opposite side 7 out of which the feeding cables 9 come.

Extending from one lateral side of envelope 3 denoted 10, is at least a tailpiece 11 made of transparent material such as for example polycarbonate, facing the microlamp 4 through a connecting surface 19 having optical transparency features.

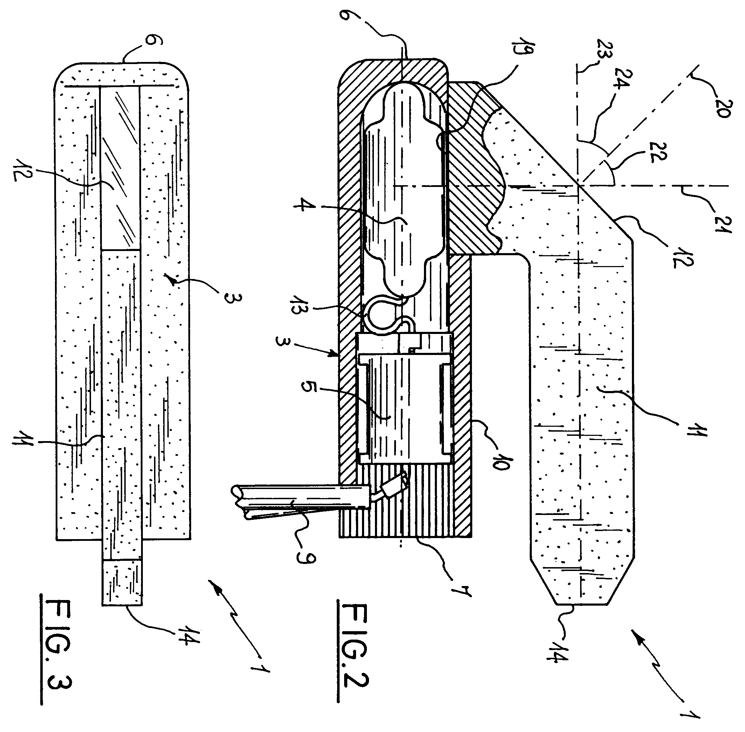

The tailpiece 11 also has at least a first optical deviation surface 12, having optical transparency features too and oriented such that its normal, identified at 20 in Fig. 2, forms a predetermined angle of incidence 22 with the normal 21 to the longitudinal axis of envelope 3.

The angle of incidence 22 must exhibit a greater value than the critical angle detectable with reference to the light refraction that originates at the light passage from the tailpiece 11 to the air or other surrounding element and a lower value than that of the critical angle detectable with reference to the light refraction originating at the light passage from the tailpiece to the liquid 2a contained in the tank 2, when said tailpiece 11 is immersed in the liquid itself.

In the embodiment described, where the elements contained in tank 2 are air and water respectively, the angle of incidence 22 has a value in the range of 42° to 53°, and preferably corresponds to 45°. Obviously the range of values of the angle of incidence 22 can vary to a large extent depending on the physical features of the elements in which the device 1 is going to operate.

The tailpiece 11 also exhibits an optically transparent end surface 14 which is aligned with the first optical deviation surface 12 according to an alignment direction denoted by 23, forming, with the direction normal to the first deviation surface, an angle of reflection 24 of substantially the same value as the angle of incidence 22. As clearly viewed from Fig. 1 this end surface 14 is exposed to the outside of tank 2 at a side wall 15 of said tank.

With reference to the second solution, designed to indicate a minimum liquid level in tank 2, the envelope 3 is preferably secured to the tank bottom 16.

In this case, in order to bring the end surface 14 onto the side wall 15 of tank 2 the tailpiece 11 must be provided, in addition to the first deviation surface 12, with a second optical deviation surface denoted by 17 parallelly facing the first optical deviation surface 12.

The end surface 14 is in alignment with the second optical deviation surface 17 according to an alignment direction forming, with the normal to the second deviation surface, an angle of reflection substantially identical with the angle of incidence 22, in the same manner as previously said with reference to Fig. 2.

Preferably, the tailpiece 11 is clouded in the areas surrounding said connection surface 19, optical deviation surfaces 12, 17, and end surface 14.

Operation of the device described above mainly as regards structure, is as follows.

It is necessary to point out first of all that the invention utilizes the optical principle of refraction taking place when a light ray passes from one medium to another having different refraction value. For example water is more refractive than air.

It is also to be noted that by angle of incidence it is intended the angle that an incident ray forms with the normal to the separation surface between the two media in the incidence point, whereas by angle of refraction it is intended the angle that the refracted ray forms with the perpendicular itself.

In addition, there is an angle, defined as "critical angle", that identifies a particular angle of incidence of such a value that the corresponding angle of refraction is 90°. The value of the critical angle varies depending on the physical features of the media passed through by light.

When light passes from a more refractive medium to a less refractive medium it will be possible to see the refraction phenomenon only in the case In which the angle of incidence is lower than the critical angle. In fact, for angles of incidence greater than the critical angle the light ray is completely reflected and remains in the more refractive medium.

In the case in question, in relation to the first embodiment of the invention shown in Fig. 1, the device 1 located at the upper part of tank 2 is above the level of liquid 2a consisting of water for example. Under this situation the light emitted from the microlamp 4 which is normally always alight, enters the tailpiece 11 through the correcting surface 19 and impinges or the first deviation surface 12 according to the angle of incidence 22.

Since in this case, based on the above explanation, the angle of incidence 22 is greater than the critical angle, the light will be unable to be refracted into the air but, on the contrary, will be completely reflected towards the end surface 14, along the alignment direction 23.

The presence of light on the end surface 14 will show that the level of liquid 2a is below the maximum level.

Should the water level rise so as to reach and cover also the deviation surface 12, then the light coming from the microlamp 4 through the connecting surface 19 would be refracted into the water, in that the value of the angle of incidence 22 will be lower than the new value of the critical angle. The absence of light on the end surface 14 will indicate in this case that the maximum level of the liquid 2a in tank 2 has been overcome.

The same remarks are valid with reference to the device 1 positioned at the lower part of tank 2.

As far as the liquid level stays above the minimum level, the light emitted from the microlamp 4 is refracted in the inside of tank 2. When the liquid level goes below the minimum level, the light coming from the microlamp 4 undergoes a double reflection onto the first and second optical deviation surfaces 12, 17 and will impinge on the end surface 14, thereby signalling the absence of liquid.

The invention attains the intended purposes.

In fact in this way it is possible in both of the described embodiments to carry out the signalling to the outside of the tank that an upper limit level has been exceeded or that there has been a lowering below a lower limit level, respectively.

The above is achieved by merely exploiting optical laws and utilizing material of low cost and easy installation without other circuit and mechanical components being required, which components would make the practical use of the device heavier and the operation thereof more complicated.

It is to be noted that the device of the invention is adapted for use not only in order to indicate the presence and/or level of a liquid, but also, for example to indicate the presence of steam in a boiler and/or the formation of calcareous scale on the deviation surface 12 and, therefore, in the boiler itself.

In order to enable the device to be used under the different situations, it will be sufficient to select each time the orientation of the optical deviation surface or surfaces depending on the requirements dictated by the physical features of the media into which the device is intended to be put for operation.

Obviously all circuit and parametric variations from an optical point of view are possible, all of them falling within the scope of the inventive idea.

**Claims**

1. An optical signalling device for tanks, of the type comprising a bulb microlamp (4) connected in circuit to a feeding cable (13, 9) and enclosed in an envelope (3) closed at least on the microlamp side (6), characterized in that associated with said envelope (3) fastened to the inside of a tank (2) is at least a side tailpiece (11) extending from the outer side edge of the envelope (3) in the vicinity of the bulb and exhibiting at least a connecting surface (19) facing said microlamp (4), at least a first optical deviation surface (12) whose normal line (20) forms a given angle of incidence (22) with the normal (21) to the longitudinal axis of the envelope (3), as well as an end surface (14) exposed to the outside of the tank (2) and aligned with respect to said first optical deviation surface (12-) according to an alignment direction (23) forming, with the normal (20) to the first optical deviation surface, an angle of reflection (24) of substantially the same value as the angle of incidence (22), said connecting surface (19), first optical deviation surface (12) and end surface (14) having optical transparency characteristics.

2. A device according to claim 1, characterized in that said angle of incidence (22) exhibits a value greater than that of the critical angle detectable with reference to the light refraction originating at the light passage from said tailpiece (11) to the surrounding air and lower than that of the critical angle detectable with reference to the light refraction originating at the light passage from said tailpiece (11) to a liquid (2a) contained in the tank (2) when said tailpiece (11) is immersed in the liquid itself.

3. A device according to claim 1, characterized in that said angle of incidence (22) is included between 42° and 53°.

4. A device according to claim 1, characterized in that said tailpiece (11) exhibits a second optical deviation surface (17) parallelly facing the first optical deviation surface (12), said end surface (14) being aligned with respect to the second optical deviation surface (17) according to an alignment direction forming, with the normal to the second surface, an angle of reflection of substantially the same value as the angle of incidence (22), said second optical deviation surface (17) having optical transparency features.

5. A device according to claim 1, characterized in that said tailpiece (11) is made of transparent plastic material and is clouded in the areas surrounding said connecting surface (19), optical deviation surfaces (12, 17) and end surface (14).

6. A device according to claim , characterized in that said tailpiece (11) is made of polycarbonate.

FIG.1

FIG.2

FIG.3

**European Patent Office**

## EUROPEAN SEARCH REPORT

Application Number

EP 92 83 0241

### DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | DE-A-1 623 936 (BOSCH)<br>* the whole document *<br>--- | 1-6 | G01F23/28 |
| X | CH-A-512 060 (AQUASANT)<br>* the whole document *<br>--- | 1-6 | |
| A | EP-A-0 003 566 (SIEMENS)<br>* page 2, line 14 - line 19 *<br>* page 5, line 28 - page 6, line 5;<br>figures 2,3 *<br>--- | 6 | |
| A | PATENT ABSTRACTS OF JAPAN<br>vol. 14, no. 286 (P-1064)20 June 1990<br>& JP-A-20 87 023 ( SEIKO EPSON ) 27 March<br>1990<br>* abstract *<br>* figure *<br><br>----- | 6 | |
| | | | TECHNICAL FIELDS SEARCHED (Int. Cl.5 ) |
| | | | G01F |

The present search report has been drawn up for all claims

| Place of search | Date of completion of the search | Examiner |
|---|---|---|
| THE HAGUE | 25 SEPTEMBER 1992 | PFLUGFELDER G.F. |

EPO FORM 1503 03.82 (P0401)